# NEW EUROPEAN PATENT SPECIFICATION

(11) **EP 0 214 827 B2**
(45) Date of publication and mention of the opposition decision: **28.01.1998**
(45) Mention of the grant of the patent: 29.07.1992
(21) Application number: 86306725.2
(22) Date of filing: 01.09.1986
(51) Int. Cl.: C08J 7/04, C08J 7/12

(54) **Method for producing a surface-metallized, moulded resin article**
Verhahren zur Herstellung von einem oberflächenmetallisierten geformten Harzgegenstand
Procédé pour la fabrication d'un article moulé à surface métallisée

(30) Priority: 02.09.1985 JP 193577/85
(43) Date of publication of application: 18.03.1987
(73) Proprietor: POLYPLASTICS CO. LTD., Higashi-ku Osaka-shi (JP)
(72) Inventor: Ikenaga, Yukio, Fuji-shi Shizuoka (JP); Kanoe, Toshio, Fuji-shi Shizuoka (JP); Okada, Tsuneyoshi, Kawasaki-shi Kanagawa (JP); Suzuki, Yoshiharu, Fuji-shi Shizuoka (JP)
(74) Representative: Livsey, Gilbert Charlesworth Norris

(56) References cited:
- EP-A- 0 178 836
- FR-A- 2 006 381
- GB-A- 2 091 274
- Rihei Tomono "plastic Metallizing", Ohm K.K.,1st Ed., May 20, 1982
- Seiji Suzuki (Sumitomo Chem. Co.) "Industrial Materials - Polyoxybenzoyl Ekonol", vol. 31, no. 6, Nikkan Kogyo Shinbunsha, June 1983, pp. 24-30
- Sozaburo Yamagushi "Secondary Processing of plastics" May 10, 1973
- Journal of Applied Polymer Science, vol. 27, pp. 2009-2014, 1982
- Polymer, vol. 26, pp. 689-703, May 1985

## Description

The present invention relates to a surface-metallized resin molding suitable for use as automotive parts, electrical and electronic parts, and other industrial parts which require heat resistance and dimensional stability.

It is a common practice to modify the surface of a resin molding by metallizing such as plating. The surface metallizing is intended to decorate the surface of a molding, and also to impart electrical conductivity to the surface of a molding, whereby forming circuits or producing antistatic properties.

The resin for metallizing is required to have (1) high strength, (2) good processability, and (3) good dimensional stability. Examples of the resin include ABS, polybutylene terephthalate. and polyacetal.

When the moldings of these resins are metallized by sputtering, plating, or vacuum deposition, cracking occurs in the metal layer due to difference in the coefficient of thermal expansion between the resin and the metal layer. These resins have a coefficient of thermal expansion in the order of 10⁻⁴ deg⁻¹, which is much greater than that of metals. (for example, nickel: 1.3 x 10⁻⁵ deg⁻¹, chromium: 6.2 x 10⁻⁶ deg⁻¹, copper: 1.7 x 10⁻⁵ deg⁻¹, and aluminum 2.4 x 10⁻⁵ deg⁻¹.)

In the case of conventional thermoplastic resins such as polypropylene, polyamide, polybutylene terephthalate, and polyacetal resin, which are crystalline resins, the metal layer formed thereon is liable to cracking after use for a long period of time. This results from the post-shrinkage which is characteristic of crystalline resins. The post-shrinkage reduces the adhesion of the metal layer.

In addition, the moldings of the conventional resins are not satisfactory in strength, dimensional stability, and heat resistance. Thus there has been a demand for the development of surface-metallized resin moldings having superior properties.

EP-A-0178836 (which is state of the art only under Art. 54(3) EPC) discloses the preparation of optical discs which comprise an anisotropic polymer substrate with a recording layer having pits and grooves formed thereon. A metal layer is applied to the untreated recording layer.

With the foregoing in mind the present inventors carried out a series of researches which led to the finding that the problems can be solved if the mouldings are produced from a melt-processable polymer capable of forming an anisotropic molten phase. Additionally it is effective if the mouldings are first subjected to surface etching by defined etching liquids.

Accordingly the present invention relates to a method for producing a surface-metallised, moulded resin article in which the resin comprises a melt-processable polymer capable of forming an anisotropic molten phase, characterised in that the resin additionally comprises one or more substances which easily undergo etching, and that the said resin is etched with an etching liquid of uniform composition which comprises a mineral acid and water and a metal layer is thereafter applied to the etched resin by sputtering, or vacuum deposition, and prior to such metallising the etched polymer is treated by a degreasing solvent and painted with a urethane paint, acrylic methane paint or acrylic ester paint.

Examples of additional substances which easily undergo etching include inorganic compounds such as kaolin, clay, talc, mica (mucovite and phlogopite), vermiculite, highly dispersible silicic acid, calcium silicate, feldspar powder, acid clay, pyrophyllite clay, silica sand, sericite, sillimanite, bentonite, glass flake, glass powder, glass beads, slate powder, silicate, calcium carbonate, chalk, barium sulfate, barium carbonate, magnesium carbonate, dolomite, barite powder, blanc fixe, precipitated calcium sulfate, calcined gypsum, alumina hydrate, alumina, antimony oxide, magnesia, titanium oxide; zinc oxide, amorphous silica, quartz powder, flint quartz, silica sand, white carbon, diatomaceous earth, wollastonite, boron nitride, and silicon nitride. They may be used individually or in combination with one another.

A moulded article produced by the method of the invention has the advantages that the defined polymer has a coefficient of linear thermal expansion which is close to that of metals and therefore the metal layer formed thereon is less liable to cracking. In addition the metal layer improves the dimensional stability and heat resistance of the polymer. The etching provides a roughened surface so as to overcome the otherwise poor adhesion of the metal layer to the polymer.

Melt-processable polymers capable of forming an anisotropic molten phase are also known as thermotropic liquid crystal polymers. Such polymers have the property that the polymer chains are regularly oriented In parallel with one another when it is in the molten state. The state in which molecules are oriented as mentioned above is referred to as the liquid crystal state or the nematic phase of a liquid crystal. The polymer like this is usually produced from a monomer which has a thin, long, and flat configuration, has a high rigidity along the long axis of the molecule, and has a plurality of chain extension linkages which are axial or parallel with one another.

The properties of the anisotropic molten phase can be determined by an ordinary polarization test using crossed nicols. More particularly, the properties can be determined with a Leitz® polarizing microscope of 40 magnifications by observing a sample placed on a Leitz® hot stage in a nitrogen atmosphere. The polymer is optically anisotropic. Namely, it transmits a light when it is placed in between the crossed nicols. When the sample is optically anisotropic, the polarized light can be transmitted through it even in a still state.

The components of the polymer forming the above-mentioned anisotropic molten phase are as follows:
(1) One or more of aromatic and alicyclic dicarboxylic acids,
(2) one or more of aromatic, alicyclic, and aliphatic diols,
(3) one or more of aromatic hydroxycarboxylic acids,
(4) one or more of aromatic thiolcarboxylic acids,
(5) one or more of aromatic dithiols and aromatic thiolphenols, and
(6) one or more of aromatic hydroxyamines and aromatic diamines.

The polymers forming the anisotropic molten phase comprise the following combinations:
I) a polyester comprising (1) and (2),
II) a polyester comprising only (3),
III) a polyester comprising (1), (2), and (3),
IV) a polythiol ester comprising only (4),
V) a polythiol ester comprising (1) and (5),
VI) a polythiol ester comprising (1), (4), and (5),
VII) a polyester amide comprising (1), (3), and (6), and
VIII) a polyesteramide comprising (1), (2), (3), and (6).

In addition to the above-mentioned combinations of the components, the polymers forming the anisotropic molten phase include also aromatic polyazomethines such as poly(nitrilo-2-methyl-1,4-phenylenenitriloethylidine-1,4-phenylenethylidine), poly(nitrilo-2-methyl-1,4-phenylenenitrilomethylidine-1,4-phenylenemethylidine) and poly(nitrilo-2-chloro-1-4-phenylenenitrilomethylidine-1,4-phenylenemethylidine).

Further, in addition to the above-mentioned combinations of the components, the polymers forming the anisotropic molten phase include polyester carbonates essentially comprising 4-hydroxybenzoyl, dihydroxyphenyl, dihydroxycarbonyl, and terephthaloyl units.

Examples of the compounds constituting the above-mentioned polymers I) to VIII) include aromatic dicarboxylic acids such as terephthalic acid, 4,4'-diphenyldicarboxylic acid, 4,4'-triphenyldicarboxylic acid, 2,6-naphthalenedicarboxylic acid, diphenyl ether-4,4'-dicarboxylic acid, diphenoxyethane-4,4'-dicarboxylic acid, diphenoxybutane-4,4'-dicarboxylic acid, diphenylethane-4,4'-dicarboxylic acid, isophthalic acid, diphenyl ether-3,3'-dicarboxylic acid, diphenoxyethane-3,3'-dicarboxylic acid, diphenylethane-3,3'-dicarboxylic acid, and naphthalene-1,6-dicarboxylicacid; and those substituted with alkyl and alkoxy groups and halogen atoms, such as chloroterephthalic acid, dichloroterephthalic acid, bromoterephthalic acid, methylterephthalic acid, dimethylterephthalic acid, ethylterephthalic acid, methoxyterephthalic acid, and ethoxyterephthalic acid.

Examples of the alicyclic dicarboxylic acids include trans-1,4-cyclohexanedicarboxylic acid, cis-1,4-cyclohexanedicarboxylic acid, and 1,3-cyclohexanedicarboxylic acid as well as those substituted with alkyl and alkoxy groups and halogen atoms, such as trans-1,4-(1-methyl)cyclohexane dicarboxylic acid and trans-1,4-(1-chloro)cyclohexanedicarboxylic acid.

Examples of the aromatic diols include hydroquinone, resorcinol, 4,4'-dihyroxydiphenyl, 4,4'-dihydroxytriphenyl, 2,6-naphthalenediol, 4,4'-dihydroxydiphenyl ether, bis-(4-hydroxyphenoxy)ethane, 3,3'-dihydroxydiphenyl, 3,3'-dihydroxydiphenyl ether, 1,6-naphthalenediol, 2,2-bis(4-hydroxyphenyl)propane, and 2,2-bis-(4-hydroxyphenyl)methane as well as those substituted with alkyl and alkoxy groups and halogen atoms, such as chlorohydroquinone, methylhydroquinone, 1-butylhydroquinone, phenylhydroquinone, methoxyhydroquinone, 1-butylhydroquinone, phenylhydroquinone, methoxyhydroquinone, phenoxyhydroquinone, 4-chlororesorcinol, and 4-methylresorcinol.

Examples of the alicyclic diols include trans-1,4-cyclohexanediol, cis-1,4-cyclohexanediol, trans-1,4-cyclohexanedimethanol, cis-1,4-cyclohexanedimethanol, trans-1,3-cyclohexanediol, cis-1,2-cyclohexanediol, and trans-1,3-cyclohexanedimethanol as well as those substituted with alkyl and alkoxy groups and halogen atoms, such as trans-1,4-(1-methyl)-cyclohexanediol and trans-1,4-(1-chloro)cyclohexanediol.

Examples of the aliphatic diols include straight-chain or branched aliphatic diols such as ethylene glycol, 1,3-propanediol, 1,4-butanediol, and neopentyl glycol.

Examples of the aromatic hydroxycarboxylic acids include 4-hydroxybenzoic acid, 3-hydroxybenzoic acid, 2-hydroxy-2-naphthoic acid, and 6-hydroxy-1-naphthoic acid as well as those substituted with alkyl and alkoxy groups and halogen atoms, such as 3-methyl-4-hydroxybenzoic acid, 3,5-dimethyl-4-hydroxybenzoic acid, 2,6-dimethyl-4-hydroxybenzoic acid, 3-methoxy-4-hydroxybenzoic acid, 3,5-dimethoxy-4-hydroxybenzoic acid, 6-hydroxy-5-methyl-2-naphthoic acid, 6-hydroxy-5-methoxy-2-naphthoic acid, 3-chloro-4-hydroxybenzoic acid, 2-chloro-4-hydroxy-benzoic acid, 2,3-dichloro-4-hydroxybenzoic acid, 3,5-dichloro-4-hydroxybenzoic acid, 2,5-dichloro-4-hydroxybenzoic acid, 3-bromo-4-hydroxybenzoic acid, 6-hydroxy-5-chloro-2-naphthoic acid, 6-hydroxy-7-chloro-2-naphthoic acid, and 6-hydroxy-5,7-dichloro-2-naphthoic acid.

Examples of the aromatic mercaptocarboxylic acids include 4-mercaptobenzoic acid, 3-mercaptobenzoic acid, 6-mercapto-2-naphthoic acid, and 7-mercapto-2-naphthoic acid.

Examples of the aromatic dithiols include benzene-1,4-dithiol, benzene-1,3-dithiol, 2,6-naphthalenedithiol, and 2,7-naphthalenedithiol.

Examples of the aromatic mercaptophenols include 4-mercaptophenol, 3-mercaptophenol, 6-mercaptophenol, and 7-mercaptophenol.

Examples of the aromatic hydroxyamines and aromatic diamines include 4-aminophenol, N-methyl-4-aminophenol, 1,4-phenylenediamine, N-methyl-1,4-phenylenediamine, N,N'-dimethyl-1,4-phenylenediamine, 3-aminophenol, 3-methyl-4-aminophenol, 2-chloro-4-aminophenol, 4-amino-1-naphthol, 4-amino-4'-hydroxydiphenyl, 4-amino-4'-hydroxydiphenyl ether, 4-amino-4'-hydroxyphenylmethane, 4-amino-4'-hydroxydiphenyl sulfide, 4,4'-diaminophenyl sulfide (thiodianiline), 4,4'-diaminodiphenyl sulfone, 2,5-diaminotoluene, 4,4'-ethylenedianiline, 4,4'-diaminodiphenoxyethane, 4,4'-diaminodiphenylmethane (methylenedianiline), and 4,4'-diaminodiphenyl ether (oxydianiline).

The polymers I) to VIII) comprising the above-mentioned components may be divided into a group of those capable of forming the anisotropic molten phase and a group of those incapable of forming said phase according to the constituting components, polymers composition, and sequence distribution. The polymers used in the present invention are limited to those of the former group.

Among the polymers capable of forming the anisotropic molten phase suitably used in the present invention, the polyesters I), II), and III), and polyesteramides VIII) can be prepared by various ester forming processes wherein organic monomers each having a functional group which can form a desired recurring unit by the condensation are reacted with each other. The functional groups of these organic monomers include carboxyl, hydroxyl, ester, acryloxy, acyl halide, and amine groups. These organic monomers can be reacted by melt acidolysis in the absence of any heat exchange fluid. In this process, the monomers are heated to form a melt. As the reaction proceeds, the solid polymer particles are suspended in the melt. In the final stage of the condensation reaction, the reaction system may be evacuated to facilitate the removal of volatile by-products as acetic acid and water.

A slurry polymerization process may also be employed in the preparation of fully aromatic polyesters suitable for use in the present invention. In this process, the solid product is obtained in the form of suspension thereof in a heat exchange medium.

In either of said melt acidolysis and slurry polymerization processes, organic monomeric reactants from which fully aromatic polyesters can be derived may be employed in the reaction in a modified form obtained by esterifying the hydroxyl group of the monomer at ambient temperature (i.e., in the form of their lower acyl esters). The lower acyl groups have preferably about 2 to 4 carbon atoms. Preferably, acetates of the organic, monomeric reactants are employed in the reaction.

Typical examples of the catalysts usable in both of the melt acidolysis and slurry processes include dialkyltin oxides (such as dibutyltin oxide), dilauryltin oxide, titanium dioxide, antimony trioxide, alkoxytitanium silicates, titanium alkoxides, alkali metal and alkaline earth metal salts of carboxylic acids (such as zinc acetate), Lewis acids (such as BF3), and gaseous acid catalysts such as hydrogen halides (e.g., HCI). The catalyst is used in an amount of generally about 0.001 to 1 wt%, particularly about 0.01 to 0.2 wt%, based on the monomer.

The fully aromatic polymers suitable for use in the present invention are substantially insoluble in ordinary solvents and, therefore, they are unsuitable for use in a solution processing process. However, as described above, these polymers can be processed easily by an ordinary melt processing process. Particularly preferred fully aromatic polymers are soluble in pentafluorophenol to some extent.

The fully aromatic polyester preferably used in the present invention have a weight-average molecular weight of generally about 2,000 to 200,000, preferably about 10,000 to 50,000, particularly about 20,000 to 25,000. The fully aromatic polyesteramides preferably used have a molecular weight of generally about 5,000 to 50,000, preferably about 10,000 to 30,000, for example, 15,000 to 17,000. The molecular weight may be determined by gel permeation chromatography or other standard methods in which no polymer solution is formed, such as a method in which terminal groups of a compression-molded film are determined by infrared spectroscopy. In another method, the molecular weight of the polymer may be determined according to a light-scattering method after it is dissolved in pentafluorophenol.

When the fully aromatic polyester or polyesteramide is dissolved in pentafluorophenol at 60°C to obtain a 0.1 wt% solution thereof, the solution has generally an inherent viscosity (I.V.) of at least about 2.0 dl/g, for example, about 2.0 to 10.0 dl/g.

The anisotropic molten phase-forming polyesters used particularly preferably in the present invention are those containing at least about 10 molar % of a naphthalene moiety-containing recurring unit such as 6-hydroxy-2-naphthoyl, 2,6-dihydroxynapthalene, and 2,6-dicarboxynaphthalene. Preferred polyesteramides are those having a recurring unit comprising the above-mentioned naphthalene moiety and 4-aminophenol or 1,4-phenylenediamine moiety. Examples of them will now be described.

### (1) Polyesters essentially comprising the following recurring units I and II:

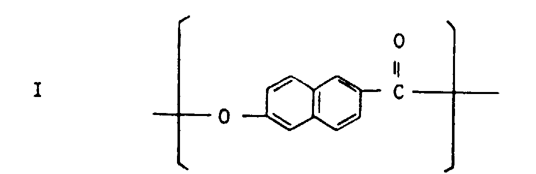

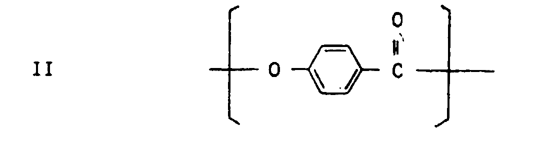

These polyesters comprise about 10 to 90 molar % of unit I and about 10 to 90 molar % of unit II. In one embodiment, unit I is contained in an amount of about 65 to 85 molar %, preferably about 70 to 80 molar % (for example, about 75 molar %). In another embodiment, unit II is contained in an amount of as small as about 15 to 35 molar %, preferably about 20 to 30 molar %. At least part of the hydrogen atoms bound directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations of them.

### (2) Polyesters essentially comprising the following recurring units II, III, and IV.

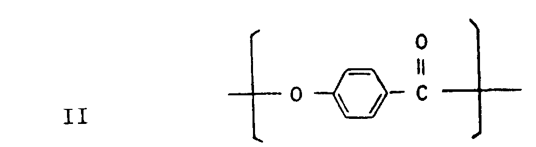

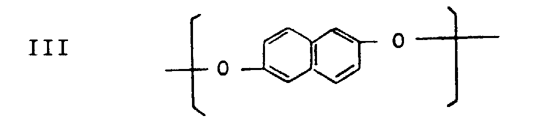

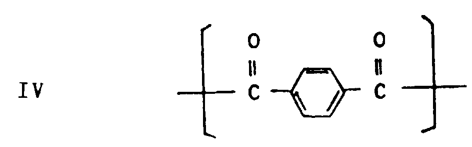

These polyesters contain about 30 to 70 molar % of unit II. They comprise preferably about 40 to 60 molar % of unit II, about 20 to 30 molar % of unit III, and about 20 to 30 molar % of unit IV. At least part of the hydrogen atoms bound directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations of them.

### (3) Polyesters essentially comprising the following recurring units II, V, IV, and VI.

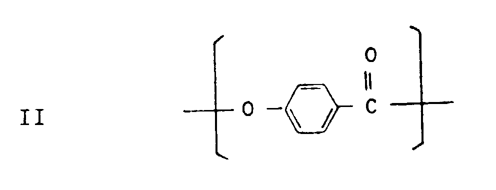

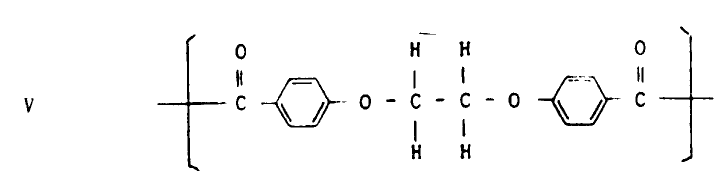

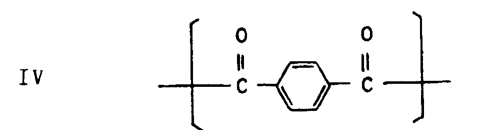

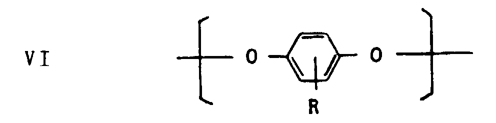

(wherein R represents a substituent for the hydrogen atom bound to the aromatic ring which is methyl, chlorine, bromine, or a combination of them.) These polyesters contain about 20 to 60 molar % of unit II, about 5 to 18 molar % of unit V, about 5 to 35 molar % of unit IV, and about 20 to 40 molar % of unit VI. Preferably, they comprise about 35 to 45 molar % of unit II, about 10 to 15 molar % of unit V, about 15 to 25 molar % of unit IV, and about 25 to 35 molar % of unit VI, with the proviso that the total molar concentration of units V and IV is substantially equal to the molar concentration of unit VI. At least part of the hydrogen atoms bound directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations of them. When the fully aromatic polyester is dissolved in pentafluorophenol at 60°C to obtain a 0.3 w/v% solution thereof, the solution has generally an inherent viscosity of at least 2.0 dl/g, for example, 2.0 to 10.0 dl/g.

### (4) Polyesters essentially comprising the following recurring units I, II, VII, and VIII:

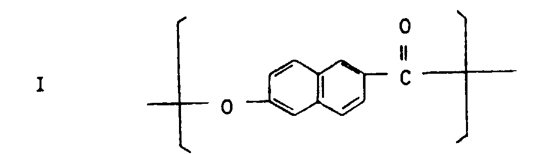

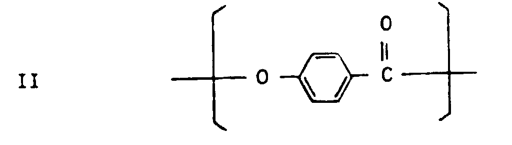

VII dioxyaryl units of the general formula: ⁅O-Ar-O⁆ wherein Ar represents a divalent group having at least one aromatic ring,
VIII IV dicarboxyaryl units of the general formula: 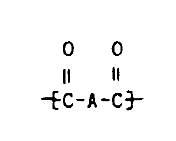 wherein Ar' represents a divalent group having at least one aromatic ring.
The amount of unit I is about 20 to 40 molar %. The amount of unit II is larger than 10 molar % but up to about 50 molar %. The amount of unit VII is larger than 5 molar % but up to about 30 molar % and that of unit VIII is larger than 5 molar % but up to 30 molar %. These polyesters comprise preferably about 20 to 30 molar % (for example, about 25 molar %) of unit I, about 25 to 40 molar % (for example, about 35 molar %) of unit II, about 15 to 25 molar % (for example, about 20 molar %) of unit VII and about 15 to 25 molar % (for example, about 20 molar %) of unit VIII. If necessary, at least part of the hydrogen atoms bound directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations of them. The units VII and VIII are preferably symmetrical. More particularly, divalent bonds which connect the unit VII or VIII with adjacent units are arranged symmetrically on one or more aromatic rings (for example, when they are on a naphthalene ring, they are arranged in positions para to each other or on diagonal rings). However, asymmetrical units derived from resorcinol and isophthalic acid may also be used.

A preferred dioxyaryl unit VII is as follows: 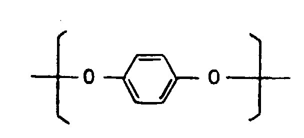 and a preferred dicarboxyaryl unit VIII is unit IV as follows:

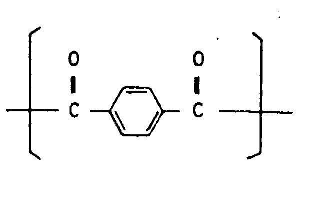

### (5) Polyesters essentially comprising the following recurring units I, VII, and VIII:

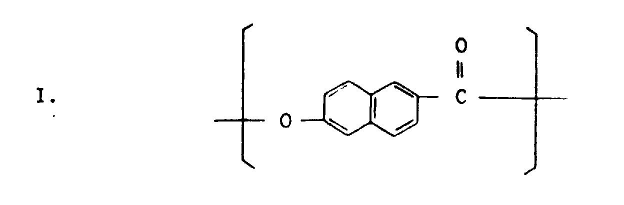

VII. dioxyaryl units of the general formula: ⁅O-Ar-O⁆ wherein Ar represents a divalent group having at least one aromatic ring,
VIII. dicarboxyaryl units of the general formula: 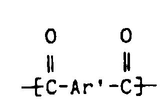 wherein Ar' represents a divalent group having at least one aromatic ring.
The amounts of units I, VII, and VIII are about 10 to 90 molar %, 5 to 45 molar %, 5 to 45 molar %, and 5 to 45 molar %, respectively. These polyesters comprise preferably about 20 to 80 molar % of unit I, about 10 to 40 molar % of unit VII, and about 10 to 40 molar % of unit VIII. More preferably, they comprise about 60 to 80 molar % of unit I, about 10 to 20 molar % of unit VII, and about 10 to 20 molar % of unit VIII. If necessary, at least part of the hydrogen atoms bound directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations of them.

A preferred dioxyaryl unit VII is as follows: 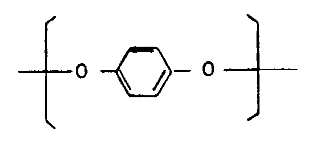 and a preferred dicarboxyaryl unit VIII is unit IV as follows:

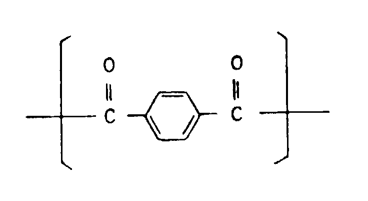

### (6) Polyesteramides essentially comprising the following recurring units I, IX, X, and VII:

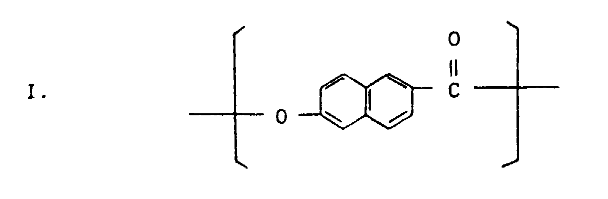

IX. units of the general formula: 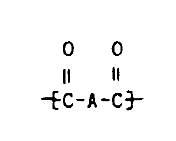
wherein A represents a divalent group having at least one aromatic ring or a divalent transcyclohexane group,
X. units of the general formula: ⁅Y-Ar-Z⁆ wherein Ar represents a divalent group having at least one aromatic ring, Y represent O, NH or NR, and Z represents NH or NR, R being an alkyl group having 1 to 6 carbon atoms or an aryl group,
VII. units of the general formula: ⁅O-Ar'-O⁆ wherein Ar' represents a divalent group having at least one aromatic ring.
The amounts of units I, IX, X, and VII are about 10 to 90 molar %, about 5 to 45 molar %, about 5 to 45 molar %, and about 0 to 40 molar %, respectively. If necessary, at least part of the hydrogen atoms bound directly to the ring may be replaced with a substituent selected from the group consisting of alkyl groups having 1 to 4 carbon atoms, alkoxy groups having 1 to 4 carbon atoms, halogen atoms, a phenyl group, substituted phenyl groups, and combinations of them.

A preferred dicarboxyaryl unit IX is unit IV as follows: 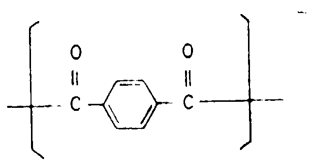 a preferred unit X is as follows: 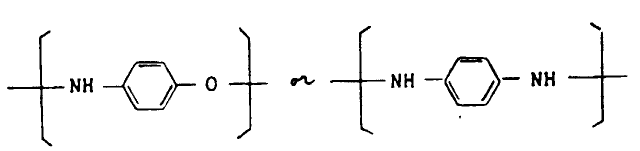 and a preferred dioxyaryl unit VIII is as follows:

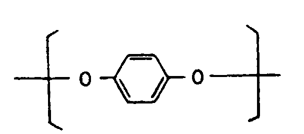

The anisotropic molten phase-forming polymers of the present invention include also those wherein part of a polymer chain comprises a segment of the above-mentioned anisotropic molten phase-forming polymer and the balance comprises a segment of a thermoplastic resin which does not form an anisotropic molten phase.

The above-mentioned resin moulding used in this invention has a much smaller coefficient of linear thermal expansion (0.3 - 0.6 x 10⁻⁶ deg⁻¹) than common thermoplastic resins and thermosetting resins. It is close to that of the above-mentioned metals. Therefore, the metal layer formed on the surface thereof is less liable to cracking.

The resin moulding used in this invention can be produced by any of injection moulding, extrusion moulding, and compression moulding which are commonly employed for the processing of thermoplastic resins.

The resin can be moulded into a variety of forms such as three-dimensional body, film, sheet, and filament yarn. These mouldings are all capable of surface metallization.

The metallizing of the resin surface is performed by any of sputtering, plating or vacuum deposition. They can be accomplished in the usual way for common resin mouldings. For example, sputtering and vacuum deposition may be performed in the same manner as employed for ABS and the like having good paintability. The moulding is degreased with a solvent and then base-coated with a urethane paint, acrylic-urethane paint, or acrylic eater paint, followed by drying. Subsequently, the base-coated moulding undergoes sputtering or vacuum deposition. Sputtering is carried out in an argon atmosphere at 0.027 to 0.133 Pa (1 x 10⁻³ to 2 x 10⁻⁴ Torr) in a sputtering apparatus. Sputtering forms a thin film (about 30 to 300 nm, i.e. 300 to 1000 Å) of chrome alloy or aluminium. This thin metal film imparts a metallic luster to the moulding. In the case of vacuum deposition, a thin film (20 to 50 mm, i.e, 200 to 500 Å) of aluminium is formed in a vacuum of 0.013 to 0.13 Pa (1 x 10⁻³ to 1 x 10⁻⁴ Torr) using a vacuum metallizer. This thin metal film imparts a metallic luster to the moulding. Usually, the metal film is finished with a topcoat for protection.

The etching is effective for a melt-processable polymer that forms an anisotropic molten phase, because it has a dense surface which
has somewhat poor adhesion to the metal film although it has high strength and good dimensional stability.

The surface roughening is accomplished by etching with an etching liquid comprising mineral acid and water. The acid may be hydrochloric acid, sulfuric acid, phosphoric acid, and mixtures thereof. Etching may be performed by the method in Japanese Laid-open patent specification Nb. 96026/1982.

In the case of metallizing by plating, it is desirable to perform the pretreatment in an aqueous solution containing alcohol and alkali, as disclosed in Japanese Patent Laid-open No. 68877/1979. In the case of metallizing by sputtering, it is desirable to apply a cellulose-based primer prior to base coat application, as disclosed in Japanese Patent Laid-open No. 51726/1982.

The melt-processable polymer composition to form the anisotropic molten phase which is used in this invention may contain one or more of (1) another polymer that forms the anisotropic molten phase, (2) a thermoplastic resin that does not form the anisotropic molten phase, (3) a thermosetting resin, (4) a low-molecular weight organic compound, and (5) a reinforcing inorganic compound or metal. These additional components are not necessarily required to be miscible with the polymer to form the anisotropic molten phase.

Examples of the above-mentioned thermoplastic resin (2) include polyethylene, polypropylene, polybutylene, polybutadiene, polyisoprene, polyvinyl acetate, polyvinyl chloride, polyvinylidene chloride, polystyrene, acrylic resin, ABS resin, AS resin, BS resin, polyurethane, silicone resin, fluoroplastic, polyacetal, polycarbonate, polyethylene terephthalate, polybutylene terephthalate, aromatic polyester, polyamide, polyacrylonitrile, polyvinyl alcohol, polyvinyl ether, polyether imide, polyamide imide, polyether imide, polyether ketone, polyether sulfone, polysulfone, polyphenylene sulfide, and polyphenyleneoxide.

Examples of the above-mentioned thermosetting resin (3) include phenolic resin, epoxy resin, melamine resin, urea resin, unsaturated polyester resin, and alkyd resin.

Examples of the above-mentioned low-molecular weight organic compound (4) include those substances to be added to common thermoplastic resins and thermosetting resins. They include plasticizer, antioxidant, UV light absorber, antistatic agent, flame retardant, dye, pigment, foaming agent, crosslinking agent (e.g., divinyl compound and peroxide), lubricant, mold release, etc.

Examples of the above-mentioned reinforcing inorganic compound or metal (5) include those substances to be added to common thermoplastic resins and thermosetting resins. They include glass fiber, carbon fiber, metallic fiber, ceramics fiber, boron fiber, asbestos fiber, potassium titanate fiber, barium titanate fiber, metallic fibers, metallic powders, carbon black, whiskers, and metallic whiskers.

The mouldings of the resin composition to form the anisotropic molten phase have a smaller post-shrinkage as compared with the mouldings of common crystalline resins. This is advantageous to the metal film formed on the mouldings. The adhesion and the crack prevention of the metal film are ensured if the mouldings are subjected to annealing at a proper temperature prior to metallizing.

### [Effect of the invention]

As mentioned above, the surface-metallized resin moulding of this invention has an advantage over the conventional surface-metallized resin moulding made of polybutylene terephthalate. It has good adhesion to the metal film and protects the metal film from cracking. In addition, it has improved heat resistance, dimensional stability, and mechanical strength, and it also has improved resistance to warpage and deformation. It is thus suitable for a variety of applications.

The following reference examples illustrate the treatment and surface-metallising of defined resins A to D which form an anisotropic melt phase. The subsequent "comparative examples" illustrate the treatment and surface-metallising of other resins, namely polybutylene terephalate and nylon.

### Example 1

A resin moulding in the form of flat plate was produced by injection moulding from Polymer A (mentioned later) which forms the anisotropic molten phase. After degreasing, it was coated with Basecoat EXP 1245 A/B/C (100/50/80 by weight) (made by Fujikura Kasei Co., Ltd.), followed by forced drying at 140°C for 60 minutes. Then, the resin moulding underwent sputtering at 0.13 Pa (1 x 10⁻³ Torr) in argon to form a 401.50mm (400 to 500 Å) thick film of chrome alloy. Finally, Topcoat EXP 1380 A/B/C (100/5/80 by weight) made by Fujikura Kasei Co., Ltd. was applied, followed by forced drying at 70°C for 30 minutes. Thus there was obtained a surface-metallized resin moulding.

### Example 2

A surface-metallized resin moulding was prepared according to the same procedure as in Example 1, except that sputtering was replaced by vacuum deposition of aluminum. A 30 to 40 nm (300 to 400 Å thick aluminum film was formed at 0.67 Pa (5 x 10⁻³ Torr).

### Example 3

A resin moulding in the form of flat plate was prepared in the same manner as in Example 1. After degreasing, it was dipped in chromic acid mixture (sulfuric acid/potassium dichromate/water = 95/2/3 by weight) at 60°C for 30 minutes. The acid was removed by neutralization with a 5% NaOH solution and rinsing. The etched resin moulding was dipped in Catalyst (catalyst/conc. HCl/water = 1/1/5 by volume), made by Kizai Co., Ltd., for 3 minutes, followed by rinsing.

The pretreated resin moulding was dipped in 5% hydrochloric acid at 25°C for 3 minutes, followed by rinsing. For nickel plating, it was then dipped in an electroless plating solution (nickel plating solution A/chemical nickel plating solution B/water = 1/1/4 by volume), made by Kizai Co., Ltd., at 30°C for 10 min. Finally, ordinary electroplating was performed to form a 20 µm thick copper film, a 10 µm thick nickel film, and 0.2 µm thick chrome film. Thus there was obtained a surface-metallized resin moulding.

### Examples 4 to 6

Surface-metallized resin mouldings were prepared according to the same procedure as in Example 3, except that polymer A was replaced by polymers B, C, and D (mentioned later), respectively.

### Example 7

A surface-metallized resin moulding was prepared in the same manner as in Example 1, except that the resin moulding was coated with DU primer (made by Kansai Paint Co., Ltd.) prior to the application of the basecoat. (DU primer is nitrocellulose plasticized with a chloroalkyl phosphate and incorporated with a boron alkyl.)

Coating was performed at a spray pressure of 294 to 490 kPa (3 to 5 kg/cm²). The spray gun was WIDER® 61-1G made by Iwata Tosoki Kogyo Co., Ltd. The distance between the spray gun and the object was 250 to 300 nm (25 to 30 cm). After the primer coating, setting was performed at normal temperature for 15 minutes to remove the solvent and to smoothen the coating. The coating was subjected to forced drying at 130 to 155°C for 30 to 100 minutes.

### Example 8

A resin molding in the form of flat plate was produced in the same manner as in Example 1 from a composition composed of polymer A and 2 wt% (based on the total amount of the composition) of polybutadiene elastomer. The resin molding was annealed at 140°C for 1 hour and then degreased with methylene chloride. Finally the rein molding was metallized in the same manner as in Example 3.

### Comparative Examples 1 to 3

Surface-metallized resin moldings were prepared in the same manner as in Examples 1 to 3, except that Polymer A was replaced by polybutylene terephthalate (PBT).

### Comparative Examples 4 to 6

Surface-metallized resin moldings were prepared in the same manner as in Examples 1 to 3, except that Polymer A was replaced by nylon.

The performance of the resin moldings obtained in Examples 1 to 8 and Comparative Examples 1 to 6 was evaluated according to the following procedures. The results are shown in Tables 1 and 2.

### Cross-cut adhesion test:

Eleven scores at 1 mm intervals were made in the mutually perpendicular directions on the metal layer. A piece of adhesive cellophane tape (conforming to JIS) was pressed against the small squares, and the number of the small squares left unpeeled was counted after the removal of the cellophane tape. The count is a measure of the adhesion of the metal layer to the substrate. The same test was conducted for a test piece which had undergone repeated heating and cooling (20 cycles) as mentioned later.

### Measurement of adhesion:

Using a knife, a 1 cm score reaching the substrate was made on the metal layer, and the metal layer was peeled off in the direction perpendicular to the substrate. The force required for peeling is an indication of adhesion.

### Heating-cooling cycle test:

One cycle consists of allowing the specimen to stand at -40°C for 2 hours, at 90°C for 2 hours, and at 40°C for 1 hour consecutively. After five cycles or 20 cycles, the surface-metallized resin moldings were examined for adhesion and external appearance.

### Heat resistance test:

After standing at 160°C for 120 hours, the surface-metallized resin moldings were examined for adhesion and external appearance.

The Polymers A, B, C, and D used in the examples are each composed of the following constituting units.

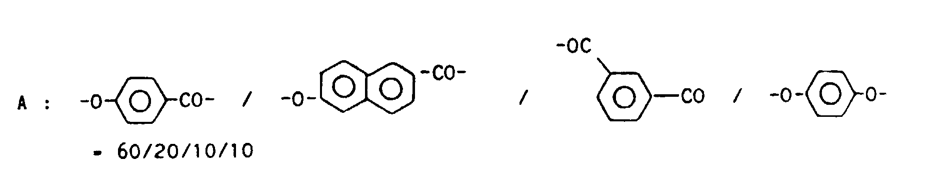

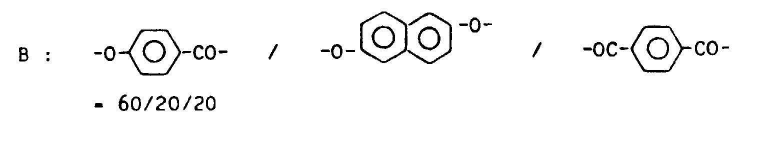

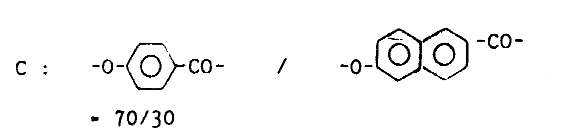

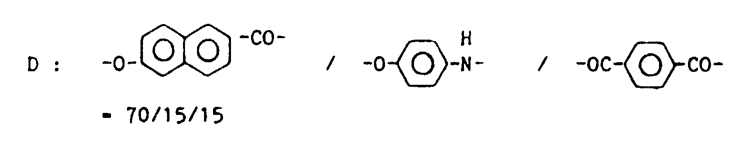

The above-mentioned resins A, B, C, and D are produced in the following manner.

### <Resin A>

1081 parts (by weight, the same shall apply hereinafter) of 4-acetoxybenzoic acid, 460 parts of 6-acetoxy-2-naphthoic acid, 166 parts of isophthalic acid, and 194 parts of 1,4-diacetoxybenzene were fed to a reactor provided with a stirrer, a nitrogen inlet tube, and a distillation tube. The mixture was heated to 260°C in nitrogen stream and stirred violently at that temperature for 2.5 h and then at 280°C for 3 h while acetic acid was distilled off from the reactor. The temperature was elevated to 320° C and nitrogen introduction was stopped. The pressure in the reactor was reduced gradually to 13.3 Pa (0.1 mmHg) after 15 min. The mixture was stirred at that temperature under that pressure for 1 h.

The obtained polymer had an intrinsic viscosity of 5.0 as determined in pentafluorophenol at a concentration of 0.1 wt% at 60°C.

### <Resin B>

1081 parts of 4-acetoxybenzoic acid, 489 parts of 2,6-diacetoxynaphthalene, and 332 parts of terephthalic acid were fed to a reactor provided with a stirrer, a nitrogen inlet tube, and a distillation tube. The mixture was heated to 250°C in nitrogen stream and stirred violently at that temperature for 2 h and then at 280°C for 2.5 h while acetic acid was distilled off from the reactor. The temperature was elevated to 320°C and the nitrogen introduction was stopped. The pressure in the reactor was reduced gradually to 0.2 mmHg after 30 min. The mixture was stirred at that temperature under that pressure for 1.5 h.

The obtained polymer had an intrinsic viscosity of 2.5 as determined in pentafluorophenol at a concentration of 0.1 wt% at 60°C.

### <Resin C>

1261 parts of 4-acetoxybenzoic acid and 691 parts of 6-acetoxy-2-naphthoic acid were placed in a reactor provided with a stirrer, a nitrogen inlet tube, and a distillation tube. The mixture was heated to 250°C in nitrogen stream and stirred violently at that temperature for 3 h and then at 280°C for 2 h while acetic acid was distilled off from the reactor. The temperature was elevated to 320°C and the nitrogen introduction was stopped. The pressure in the reactor was reduced gradually to 13.3 Pa (0.1 mmHg) after 20 min. The mixture was stirred at that temperature under that pressure for 1 h.

The obtained polymer had an intrinsic viscosity of 5.4 as determined in pentafluorophenol at a concentration of 0.1 wt% at 60°C.

### <Resin D>

1612 parts of 6-acetoxy-2-naphthoic acid, 290 parts of 4-acetoxy-acetanilide, 249 parts of terephthalic acid, and 0.4 parts of sodium acetate were placed in a reactor provided with a stirrer, a nitrogen inlet tube, and a distillation tube. The mixture was heated to 250°C in nitrogen stream and stirred violently at that temperature for 1 h and then at 300°C for 3 h while acetic acid was distilled off from the reactor. The temperature was elevated to 340°C and the nitrogen introduction was stopped. The pressure in the reactor was reduced gradually to 26.7 Pa (0.2 mmHg) after 30 min. The mixture was stirred at that temperature under that pressure for 30 min.

The obtained polymer had an intrinsic viscosity of 3.9 as determined in pentafluorophenol at a concentration of 0.1 wt% at 60°C.

**Table 1**

| | | Cross-cut test | | Cracking |
|---|---|---|---|---|
| Example | Resin used | Before heating and cooling | After 20 cycles of heating and cooling | After 20 cycles of heating and cooling |
| 1 | A | 100 | 100 | no |
| 2 | A | 100 | 100 | no |
| 3 | A | 100 | 100 | no |
| 4 | B | 100 | 100 | no |
| 5 | C | 100 | 100 | no |
| 6 | D | 100 | 100 | no |
| 7 | A | 100 | 100 | no |
| 8 | A | 100 | 100 | no |
| 1* | PBT | 82 | 70 | many |
| 2* | PBT | 81 | 69 | some |
| 3* | PBT | 100 | 100 | many |
| 4* | nylon | 100 | 95 | many |
| 5* | nylon | 100 | 96 | some |
| 6* | nylon | 100 | 97 | many |

| | | | | |
|---|---|---|---|---|
| * Comparative Examples The number in the cross-cut test is the number of squares left unpeeled. | | | | |

**Table 2**

| Adhesion (kg/cm) and Appearance | | | | | | |
|---|---|---|---|---|---|---|
| Example | Adhesion before cycles | Adhesion after 5 cycles | Adhesion after 20 cycles | Appearance after 20 cycles | Adhesion after heating | Appearance after heating |
| 3 | 1.2 | 1.2 | 1.2 | no change | 1.3 | no change |
| 3* | 0.8 | 0.7 | 0.5 | many cracks | 0.5 | many cracks |
| 4* | 0.7 | 0.4 | 0.3 | many cracks | 0.4 | many cracks |

| | | | | | | |
|---|---|---|---|---|---|---|
| * Comparative Examples (1 Kg/cm = 10 Kg/mm | | | | | | |

## Claims

1. A method for producing a surface-metallised, moulded resin article in which the resin comprises a melt-processable polymer capable of forming an anisotropic molten phase, characterised in that the resin additionally comprises one or more substances which easily undergo etching, and that the said resin is etched, with an etching liquid of uniform composition which comprises a mineral acid and water, and a metal layer is thereafter applied to the etched resin by sputtering, or vacuum deposition and prior to such metallising the etched polymer is treated by a degreasing solvent and painted with a urethane paint, acrylic urethane paint or acrylic ester paint.

2. A method as claimed in claim 1 characterized in that the resin additionally comprises one or more of
(1) another polymer which forms an anisotropic phase,
(2) a thermoplastic resin which does not form an anisotropic phase,
(3) a thermosetting resin,
(4) a low-molecular weight organic compound, and
(5) a reinforcing inorganic compound or metal

3. A method as claimed in claim 1 or claim 2 characterized in that the resin to be etched and coated is in the form of a three-dimensional body, film sheet or filament.

4. A method as claimed in any preceding claim, characterized in that a protective topcoat is applied to the metal layer.

## Patentansprüche

1. Verfahren zur Herstellung eines oberflächenmetallisierten Harzformkörpers, wobei das Harz ein in der Schmelze verarbeitbares Polymer umfaßt, das zur Bildung einer anisotropen Schmelzphase befähigt ist, dadurch gekennzeichnet, daß das Harz zusätzlich eine oder mehrere Substanzen umfaßt, die sich leicht ätzen lassen, und daß das Harz mit einer Ätzflüssigkeit einheitlicher Zusammensetzung geätzt wird, die eine Mineralsäure und Wasser umfaßt, und danach eine Metallschicht durch Aufstäuben oder Vakuum-Abscheidung auf das geätzte Harz aufgebracht wird und das geätzte Polymer vor dem Metallisieren mit einem entfettenden Lösungsmittel behandelt und mit einem Urethan-Anstrichmittel, Acryl-Urethan-Anstrichmittel oder Acrylester-Anstrichmittel angestrichen wird.

2. Verfahren nach Anspruch 1, dadurch gekennzeichnet, daß das Harz zusätzlich einen oder mehrere der Stoffe aus
(1) einem weiteren Polymer, das eine anisotrope Phase bildet,
(2) einem thermoplastischen Harz, das keine anisotrope Phase bildet,
(3) einem warmhärtenden Harz,
(4) einer niedermolekularen organischen Verbindung, und
(5) einer verstärkenden anorganischen Verbindung oder einem verstärkenden Metall
umfaßt.

3. Verfahren nach Anspruch 1 oder 2, dadurch gekennzeichnet, daß das zu ätzende und zu beschichtende Harz in Form eines dreidimensionalen Körpers, eines Films, einer Folie oder eines Filaments vorliegt.

4. Verfahren nach einem der vorhergehenden Ansprüche, dadurch gekennzeichnet, daß auf die Metallschicht eine schützende Deckschicht aufgebracht wird.

## Revendications

1. Un procédé pour produire un article de résine moulé à surface métallisée dans lequel la résine comprend un polymère façonnable à l'état fondu capable de former une phase fondue anisotrope, caractérisé en ce que la résine est attaquée avec un liquide d'attaque de composition homogène qui comprend un acide, un alcool ou une base alcaline, et une couche métallique est appliquée ensuite à la résine attaquée, par pulvérisation cathodique, dépôt par immersion ou dépôt sous vide, et en ce qu'avant cette métallisation, le polymère attaqué est traité par un solvant de dégraissage et peint avec une peinture du type uréthanne, une peinture du type uréthanne-acrylique ou une peinture du type ester acrylique.

2. Un procédé tel que revendiqué à la revendication 1, caractérisé en ce que la résine comprend, de plus, l'un ou plusieurs de
(1) un autre polymère qui forme une phase anisotrope,
(2) une résine thermoplastique qui ne forme pas de phase anisotrope,
(3) une résine thermodurcissable,
(4) un composé organique de bas poids moléculaire, et
(5) un composé minéral ou un métal de renforcement.

3. Un procédé tel que revendiqué à la revendication 1 ou 2, caractérisé en ce que la résine devant être attaquée et revêtue est sous la forme d'un corps tridimensionnel, d'une pellicule, d'une feuille ou d'un filament.

4. Un procédé tel que revendiqué dans l'une quelconque des revendications précédentes, caractérisé en ce qu'une couche supérieure de protection est appliquée à la couche métallique.
